# EUROPEAN PATENT APPLICATION

(11) **EP 4 851 827 A1**
(43) Date of publication of application: **09.12.2026**
(21) Application number: 26181976.7
(22) Date of filing: 29.05.2026
(51) Int. Cl.: G06F 16/9535

(54) **LONG-TERM AND SHORT-TERM PROFILES FOR SEARCH AND RECOMMENDATION EXPERIENCES**

(30) Priority: 06.06.2025 US 202519231178
(71) Applicant: Microsoft Technology Licensing, LLC, Redmond, Washington 98052-6399 (US)
(72) Inventor: HU, Xinyu, Redmond, 98052-6399 (US); LIU, Yi, Redmond, 98052-6399 (US); LOU, Qiang, Redmond, 98052-6399 (US); PFEIFFER, Joseph J., Redmond, 98052-6399 (US); JIAO, Jian, Redmond, 98052-6399 (US); KIM, Tae Hyun, Redmond, 98052-6399 (US)
(74) Representative: Murgitroyd & Company

(57) **Abstract**

The technology relates to systems and methods for efficiently surfacing data. In examples, long-term web activity data for a unique identifier is pre-processed. The pre-processed long-term web activity data is then used to generate a long-term profile for the unique identifier. The long-term profile and short-term web-activity data are then used to generate a short-term profile for the unique identifier. The short-term profile may be in the form of an embedding. Data is then identified and/or surfaced based on at least one of the long-term profile and the short-term profile.

## Description

### BACKGROUND

In the realm of data extraction and surfacing, the challenge of executing search queries effectively has become increasingly pronounced. This difficulty arises from the inherently limited data contained within the query itself, juxtaposed against the vast and everexpanding repositories of information available for search. These repositories include extensive databases and the vast expanse of information accessible via the Internet. The sheer volume and diversity of data present significant obstacles in identifying and retrieving information that is both accurate and relevant to the user's needs.

### SUMMARY

The scope of the invention is in accordance with the appended claims. The technology disclosed relates to extracting and surfacing data based on unique context to improve the accuracy and/or relevancy of the surfaced data for the particular user or system. For instance, personalized web services may be provided through stateful agents that are able to store and represent interests, preferences, and interactions for users and/or the unique identifiers associated with the users. Such technology is unlike other systems that are largely stateless. By leveraging comprehensive, long-term data corresponding to search and raw web activity data, generative AI systems (such as large language models (LLMs)) are better able to capture the high-dimensional aspects of the identities and preferences of the users.

This system is able to combine prior user queries, long-term user profiles, short-term profile embeddings, and/or other contextual information to generate personalized experiences that seamlessly integrate into the user's subsequent online interactions across search, chat interfaces, and other services. In an example, the technology preprocesses long-term web activity data for a unique identifier. The preprocessed long-term web activity data is integrated into a long-term profile request for a first artificial intelligence (AI) system. The AI system processes the request and generates the long-term profile for the unique identifier. Short-term web activity data may then be accessed. The short-term web activity data and the long-term profile are then integrated into a short-term profile request. The short-term profile request is provided to a second AI system, which may be a sequential modeling system. The second AI system generates an embedding representing the short-term profile for the unique identifier. Data may then be extracted and surfaced based on the long-term profile and/or the short-term profile.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

The present disclosure is illustrated by way of example by the accompanying figures, in which like references indicate similar elements. Elements in the figures are illustrated for simplicity and clarity and have not necessarily been drawn to scale.
FIG. 1 depicts an example system for efficiently surfacing data through long-term and short-term profiles.
FIG. 2 depicts an example server device of the system of FIG. 1.
FIG. 3 depicts an example client device of the system of FIG. 1.
FIG. 4 depicts an example data flow for efficiently surfacing data through long-term and short-term profiles.
FIG. 5 depicts an example process for preprocessing web activities for a unique identifier.
FIG. 6 depicts an example data flow for generating a long-term profile.
FIG. 7 depicts an example data flow for generating a short-term profile.
FIG. 8 depicts an example process for rewriting and executing a query.
FIG. 9A depicts an example process for efficiently surfacing data through long-term and short-term profiles.
FIG. 9B depicts an example process for updating a long-term profile.
FIG. 10 is a flowchart of an example process for preprocessing raw web-activity data for use in generating long-term and/or short-term profiles.
FIG. 11 depicts a block diagram of example physical components of a computing device with which aspects of the disclosure may be practiced.

### DETAILED DESCRIPTION

As briefly described above, extracting and surfacing data, such as through executing search queries, continues to be a difficult task due in part to the limited data included in the query itself and the vast amounts of data available to be searched, such as large databases or the entirety of the information accessible via the Internet. Traditional search systems often rely on stateless methodologies, which fail to account for the dynamic nature of user preferences and interactions. These systems typically process queries without considering the broader context, leading to results that may not fully align with the user's specific requirements or interests. The lack of personalization in these systems results in a generic search experience that does not adapt to the unique identifiers or evolving preferences of individual users.

Moreover, as data continues to proliferate, the challenge of maintaining up-to-date and relevant information becomes increasingly complex. Systems that do not effectively manage the balance between historical and current data risk relying on outdated information, which can further diminish the relevance of search results. This is particularly problematic in retrieval-augmented generation (RAG) systems, where the accumulation of data over time can lead to increased processing demands and latency issues, as well as the indiscriminate weighting of older data alongside newer, potentially more pertinent information.

As users interact with digital platforms, they generate a wealth of data that, if harnessed correctly, can significantly enhance the accuracy and relevancy of search results. However, the challenge lies in effectively capturing, processing, and integrating this data into search systems without overwhelming those systems or introducing inefficiencies and performance degradations. Existing systems struggle to scale effectively while maintaining the precision and speed necessary for real-time data retrieval and surfacing.

Among other things, the technology disclosed herein addresses the above problems by providing a comprehensive approach to extracting and surfacing data based on unique context to improve the accuracy and/or relevancy of the surfaced data for the particular user or system. For instance, personalized web services may be provided through stateful agents that are able to store and represent interests, preferences, and interactions for users and/or the unique identifiers associated with the users. Such technology is unlike other systems that are largely stateless. By leveraging comprehensive, long-term data corresponding to search and raw web activity data, generative AI systems (such as large language models (LLMs)) are better able to capture the high-dimensional aspects of the identities and preferences of the users.

This system is able to combine prior user queries, long-term user profiles, short-term profile embeddings, and/or other contextual information to generate personalized experiences that seamlessly integrate into the user's subsequent online interactions across search, chat interfaces, and other services. Such use shares some similarities with retrieval-augmented generation (RAG), but the present technology provides for better scalability and also avoids reliance, or over reliance, on stale or outdated information. For instance, the profiles discussed herein may be substantially fixed length (or within a range of limited lengths). This fixed length allows for capturing and representing significant amounts of data within a fixed length representation that can continue to be processed by AI model systems efficiently and within the input-token limitations of such model systems. In contrast, the data relied on by RAG systems continues to grow larger adding additional processing resources and introducing latency into the processes and systems. In addition, in such RAG systems, older data (which may no longer be relevant) is generally still considered on an equal weighting as recent data.

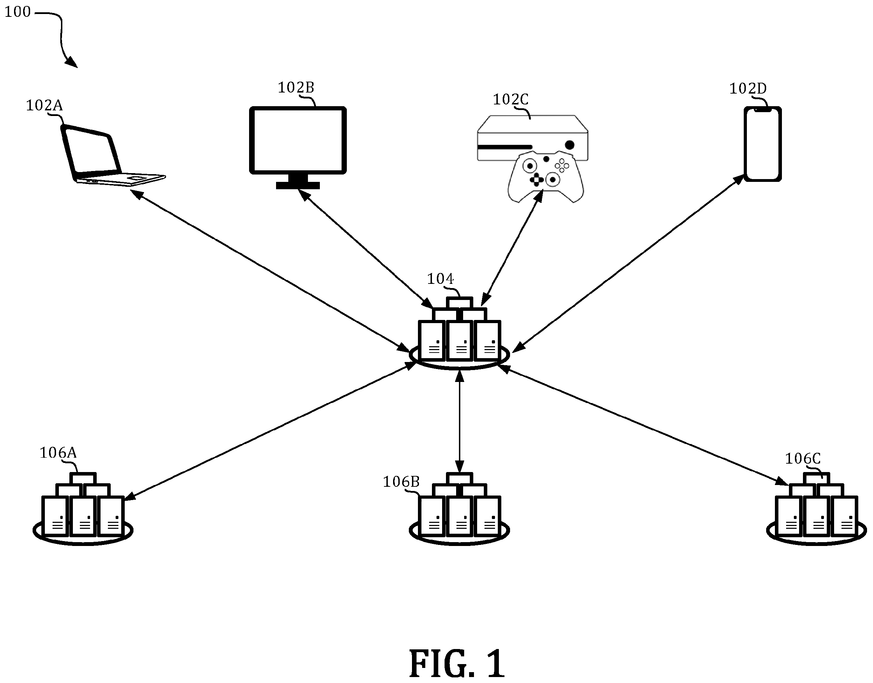

FIG. 1 depicts an example system 100 for efficiently surfacing data through long-term and short-term profiles. The system includes a plurality of client devices 102, such as a first client device 102A, a second client device 102B, a third client device 102C, and a fourth client device 102D. The client devices 102 may be associated with a single user that is identified with a unique identifier. In other examples, the client devices 102 may be associated with multiple different users. The client devices 102 may be of different types that can access the Internet and/or web-based resources. The client devices 102 may perform many different types of web activities, such as performing search queries, browsing different web resources and/or web pages, and/or interacting with chat agents powered by artificial intelligence (AI) systems (e.g., large language models). The client devices 102 may also come in various forms, such as laptops, desktops, gaming devices, smart devices, smart phones, tablets, etc.

The system 100 further includes a server device 104 and multiple data sources 106, such as a first data source 106A, a second data source 106B, and a third data source 106C. The server device 104 receives and processes the web activity data that is generated from the client devices 102, as discussed further herein. For instance, the server device 104 aggregates the web activity data for one or more unique identifiers associated with different users. Based on the aggregated web activity, the server device 104 then generates a long-term profile and/or a short-term profile for each of the unique identifiers.

The generated profiles may then be used to surface data to one or more of the client devices 102 corresponding to the unique identifier. For instance, data available from the data sources 106 may be accessed and selected based on the generated profiles. As an example, a search query may be generated from the generated profiles, and that search query is executed to extract data from the data sources 106 that satisfies the search query. Those search results may then be surfaced to one or more of the client devices 102 associated with the unique identifier for which the search results were generated.

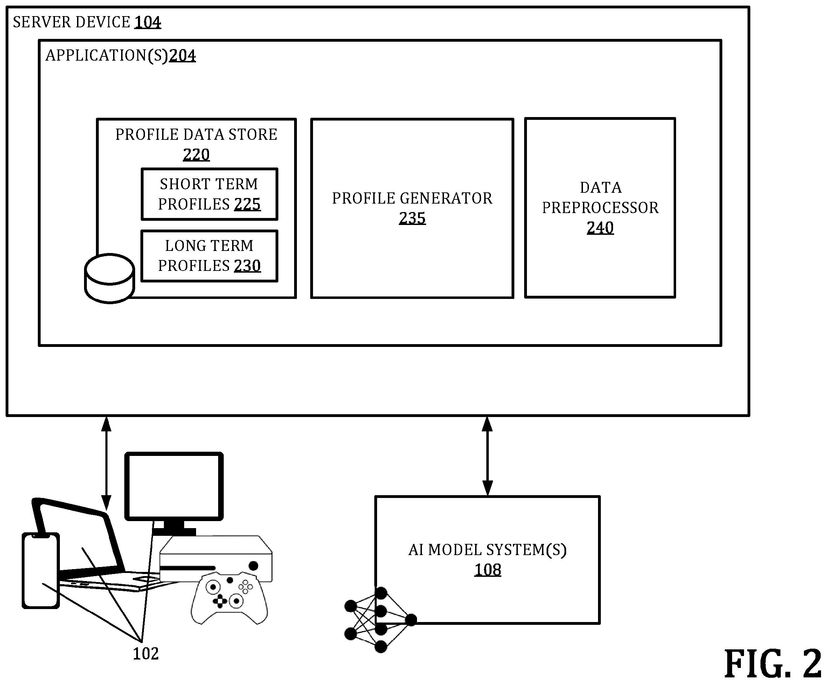

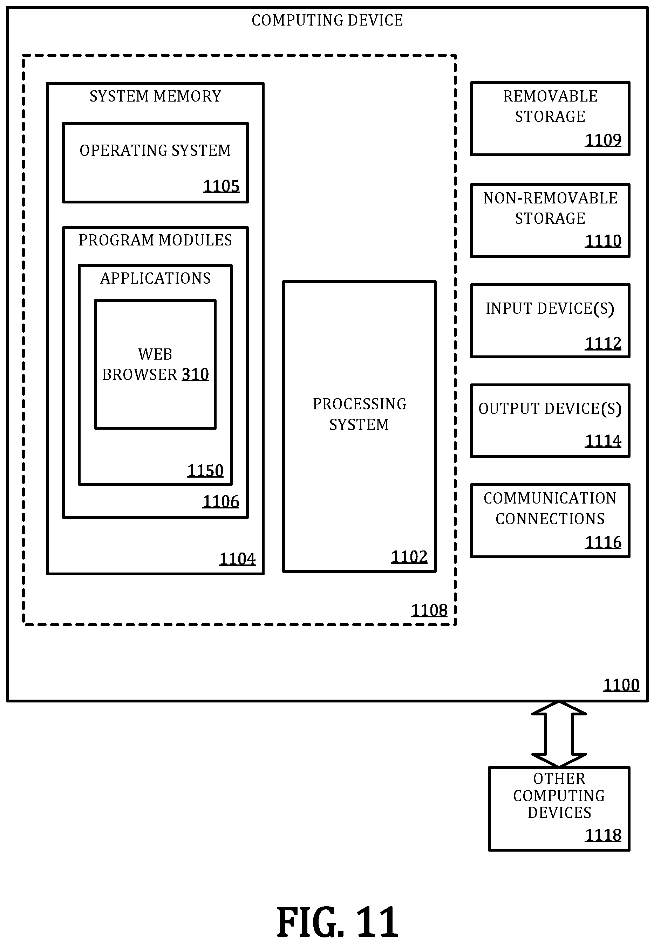

FIG. 2 depicts an example server device 104 of the system of FIG. 1. The example server device 104 includes computing components, such as those depicted in FIG. 11. The server device 104 executes one or more applications 204 that perform the operations discussed herein. The applications 204 may provide various functionality and storage capabilities. For example, the server device 104 may include a profile data store 220. The profile data store 220 includes a short-term profile store 225 for short-term profiles and a long-term profile store 230 for long-term profiles.

The server device 104 also includes a profile generator 235. The profile generator 235 executes instructions that cause the generation of the profiles discussed herein. For instance, the profile generator 235 may execute the operations and data flows discussed herein that result in the generation of the profiles. The profile generator 235 may be in communication with one or more AI model systems 108, which may operate on remote or cloud-based devices that are separate from the server device 104. In other examples, the server device 104 hosts at least one of the AI model systems 108 directly. The profile generator 235 may generate requests (e.g., prompts) that are transmitted to the AI model systems 108. The AI model systems 108 process the requests and generate results that are then transmitted back to the profile generator 235. Once the profile generator 235 generates the long-term profiles and/or the short-term profiles, profiles are stored in the short-term profile store 225 or the long-term profile store 230, respectively.

The one or more AI model systems 108 may include generative AI models as well as machine-learning (ML) models, such as classifiers, among other types of models. The one or more AI models may also include one or more orchestrators that control data flow between the models, such as providing inputs to some models and managing outputs from other models. The prompt generation may also be handled within the one or more AI model systems as well or within the profile generator 235.

The generative AI models within the AI model systems may be in the form of large language models (LLMs), small language models (SLMs), or simply language models (LMs) in general. These types of models represent a sophisticated class of artificial intelligence systems designed to generate complex output data, such as human-like text or other modalities, based on input data. These models are typically built upon deep learning architectures, such as transformer networks, which enable them to process and generate text with fluency and coherence. Generally, the mechanism of LLMs involves training on vast corpora of data, allowing the model to learn patterns, structures, and nuances of human language. During training, the model adjusts its internal parameters through, for example, a process called backpropagation, optimizing the model's ability to predict the next word in a sequence given the preceding context. This training process results in a model that can generate text, among other data, that is contextually relevant and semantically meaningful. While primarily discussed as being text-based, the LMs may also be multimodal in that the models are capable of handling multiple modalities of inputs and outputs (e.g., text, images, audio).

In some examples, the architecture of LMs is primarily based on the transformer model, which employs self-attention mechanisms to weigh the significance of different words in a sentence relative to each other. This self-attention mechanism allows the model to capture long-range dependencies and contextual relationships within the text, which are helpful for generating coherent and contextually appropriate responses. The transformer architecture is composed of multiple layers, each containing a series of attention heads and feed-forward neural networks, which collectively enable the model to process and generate text with high accuracy and fluency. The scalability of this architecture allows for the creation of models with billions of parameters, enhancing their ability to understand and generate complex language constructs.

Several examples of generative AI models, such as LMs, include the GPT (Generative Pre-trained Transformer) series from OpenAI, BERT (Bidirectional Encoder Representations from Transformers) from Google, and the Llama series of models from Meta, and the Phi series of models from Microsoft. The deployment of LMs in various applications may further involve fine-tuning the pre-trained models on specific datasets relevant to the target task. This fine-tuning process allows the model to adapt its general language understanding to the nuances of the specific application, thereby enhancing its performance. Additionally, techniques such as transfer learning and zero-shot learning are often employed to extend the capabilities of LMs to new tasks with minimal additional training. Such functions and features may also be implemented with the technology described herein.

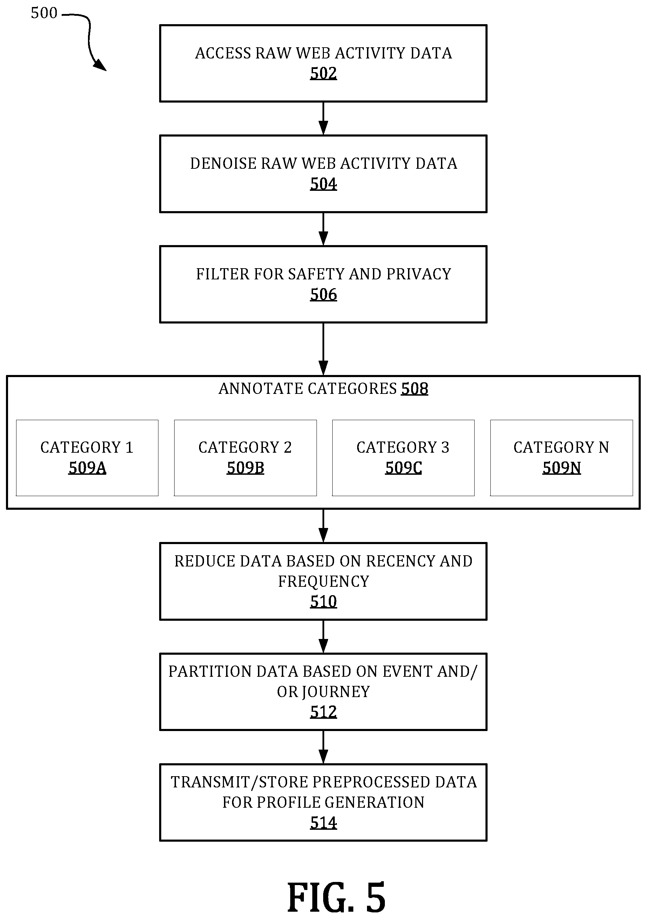

The example server device 104 also includes a data preprocessor 240. The data preprocessor 240 is able to process the raw web activity data aggregated from the client devices 102 prior to the web activity data being used by the profile generator 235 to generate the profiles. For example, the data preprocessor 240 denoises the web activity data and filters the web activity data for safety and/or privacy policies. The data preprocessor 240 also further categorizes the web activity data such that the individual elements of the web activity data are each tagged with a particular category. In addition, the data preprocessor 240 further prunes or reduces the amount of web activity data that is used in generating the respective profiles. This additional reduction is based on the recency and/or frequency of the web activity data. The remaining web activity data is also partitioned by the profile generator 235. The partitioning of the web activity data is performed to reorganize the data into partitions based on an event-basis and/or a journey basis. For instance, web activity data that share a temporal and contextual relationship are grouped together within a partition of the web activity data. In some examples, this partitioned web activity data is considered the preprocessed web activity data. Additional details regarding the preprocessing of the raw web activity data are provided herein, such as with reference to FIG. 5. Once the preprocessed web activity data is generated and/or stored, the preprocessed web activity data is provided to the profile generator 235 for use in generating the profiles discussed herein.

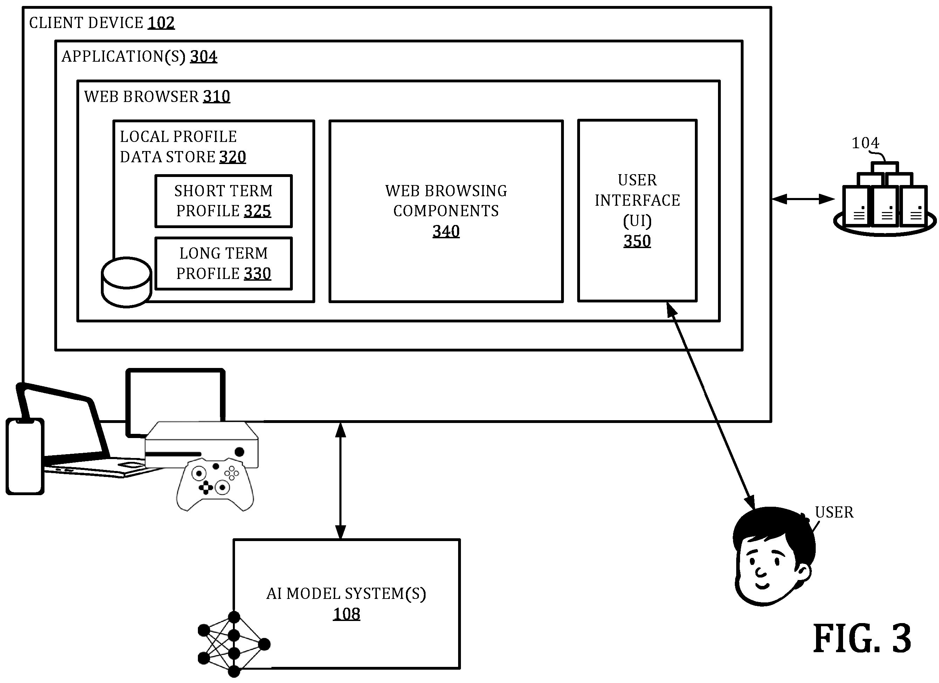

FIG. 3 depicts an example client device 102 of the system of FIG. 1. The client device 102 includes computing components, such as those depicted in FIG. 11. The client device 102 executes one or more applications 304 that perform the operations discussed herein. The applications 304 may provide various functionality and storage capabilities. For example, the client device 102 may include a web browser 310 that provides web-browsing capabilities as well as the profile-based functionality discussed herein.

The web browser 310 may include a local profile data store 320 that stores profiles for the unique identifiers associated with the particular client device 102, which may be a single unique identifier in some examples. For instance, the local profile data store 320 stores a short-term profile 325 for the unique identifier and a long-term profile 330 for the unique identifier.

The web browser 310 may also include web browsing components 340 along with a user interface 350. The web browsing components 340 control functions associated with requesting and/or retrieving web-based resources such as webpages. These components may include a rendering engine, which interprets HyperText Markup Language (HTML), Cascading Style Sheets (CSS_, and JavaScript to display content accurately, and a network protocol handler that manages hypertext transfer protocol (HTTP/HTTPS) requests and responses. Additionally, caching mechanisms within the web browsing components 340 can store frequently accessed resources to improve load times and reduce bandwidth usage.

The web-based resources and/or other information are displayed through the user interface 350. The user interface 350 may be designed with responsive elements that adapt to different systems, screen sizes, and resolutions. The user interface 350 may also incorporate accessibility features such as screen reader compatibility and keyboard navigation to cater to users with disabilities. Interactions with the web browser 310 may also be received via the user interface 350. For instance, search queries may be received via the user interface 350, which may include a search bar. Corresponding search results may be displayed via the user interface, potentially organized with filters and sorting options to allow users to refine their search outcomes based on relevance, date, or other criteria. For example, the search query may be directed to one or more of the data sources 106, and the search results are extracted from the data sources 106.

In other examples, the web browser 310 (or another of the applications 304) may interact and/or otherwise communicate with the one or more AI model systems 108. For instance, a chat-based interface may be provided by the web browser 310 or another of the applications 304. The functionality of that chat-based interface may be provided by the AI model systems 108. For instance, inputs for the chat-based interface may be received via the user interface 350 and transmitted to the AI model systems 108. The AI model systems 108 process the inputs and provide responses to the inputs that are then surfaced in the chat-based interface. In examples discussed herein, the long-term profile and/or the short-term profile may be provided along with the inputs for the chat interface that are provided to the AI model systems 108. The profile data provides additional context for the AI model systems 108 such that the responses that are produced are more likely to be accurate and/or relevant to the particular unique identifier and therefore the user.

The activities performed by the web browser 310 are tagged or otherwise associated with the unique identifier for the user that caused the actions to be performed. The data representing the web activities for a particular unique identifier is then transmitted to the server device 104 for storage and processing. This web activity data may be considered the raw web activity data.

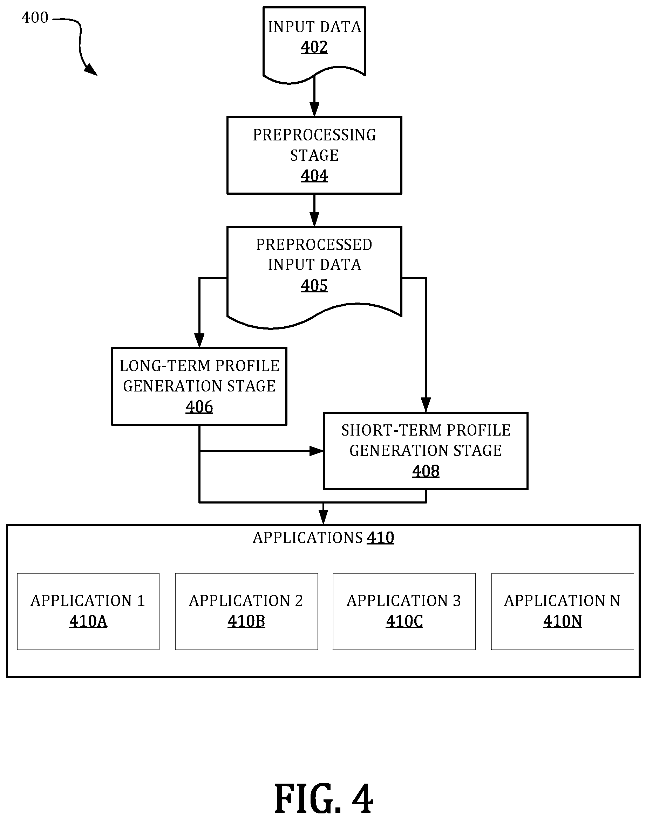

FIG. 4 depicts an example data flow 400 for efficiently surfacing data through long-term and short-term profiles. At an initial stage, input data 402 is accessed or otherwise obtained. The input data 402 may be in the form of raw web activity data along with other types of data, such as demographic data associated with the unique identifier. The input data 402 may be a for time period or range, such as six months or a year of data (among other time periods) from the time the profiles are being generated. The data from the full time period may be used for generation of the long-term profile, whereas a shorter time period is used for generation of the short-term profile. In some examples, the long-term profile is based on web activity for a first time period of between six months to two years, and the short term-profile is based on web activity data for a second time period of between one to two weeks. Accordingly, the first time period (for the long-term profile) may be at least six times greater in duration than the second time period (for the short-term profile).

The input data 402 is then processed at a preprocessing stage 404. In the preprocessing stage 404, the input data 402 is processed prior to being used during the generation of the profiles discussed herein. Processing of the input data 402 results in preprocessed input data 405, such as preprocessed web activity data. The data preprocessing may transform the raw web activity data into clean, categorized, and privacy compliant data points for use in the profile generation processes. Additional details of processing the input data 402 to generate the preprocessed input data 405 are discussed further herein, such as with respect to FIG. 5.

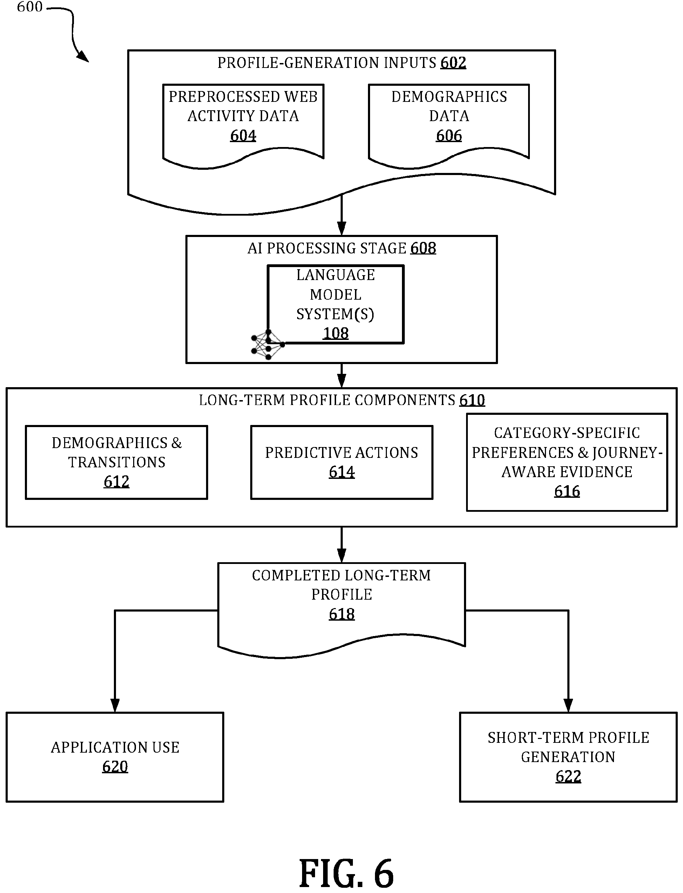

The data flow 400 then branches into two complementary profile-generation paths, including a long-term profile generation stage 406 and a short-term profile generation stage 408. For instance, the preprocessed input data 405 is used in the long-term profile generation stage 406 and a short-term profile generation stage 408. In the long-term profile generation stage 406, the long-term profile for the unique identifier is generated based on the preprocessed input data 405 over the first time period. Additional details regarding generating the long-term profile are discussed further herein, such as with reference to FIG. 6. The generated long-term profile is then provided as input to the short-term profile generation stage 408.

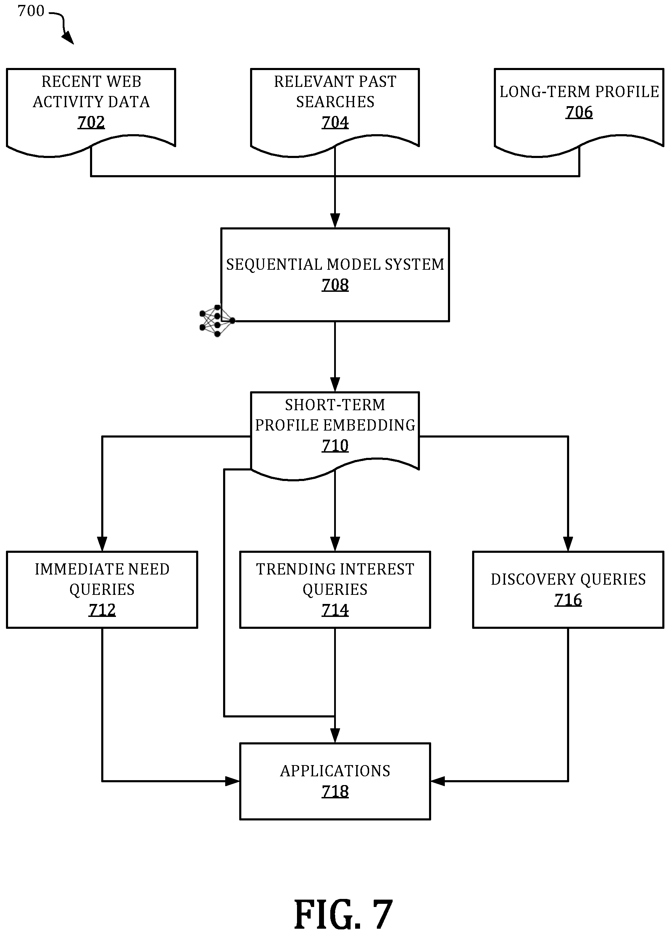

In the short-term profile generation stage 408, the short-term profile is generated based on the preprocessed input data 405 for the second, shorter time period as well as the long-term profile generated in the long-term profile generation stage 406. For instance, the long-term profile feeds into the short-term profile generation stage 408 to help ensure that the recent activity data is still contextualized within the broader patterns for the user. Additional details regarding generating the short-term profile are discussed further herein, such as with reference to FIG. 7.

The long-term profile and the short-term profile may then be provided to one or more applications 410, such as a first application 410A, a second application 410B, a third application 410C, through an Nth application 410N. Different numbers of applications 410 may be used in various examples and embodiments. The different applications 410 may use the long-term profile and/or the short-term profile to surface different types of data that are more specific to the unique identifier associated with the respective profiles.

The different applications may provide for personalization that identifies and surfaces data that is particular or personalized to the particular user associated with the unique identifier for the long-term profile and/or short-term profile. For instance, an audience targeting application may be executed that creates defined audience segments through progressive refinement. An example audience targeting application may identify a segment definition, perform interest matching, identify lookalike audiences, and determine behavioral patterns from the profiles discussed herein.

Data may also be surfaced through a search application that is able to generate personalized queries through query rewriting and expansion as discussed further herein. This may lead to personalized results in a search engine results page (SERP) and/or customized generative SERP that provides additional data generated from a generative AI model, such as a model in the one or more AI models 108. For example, when a search request is received, the search request may be provided to the generative AI model with one or more of the profiles discussed herein. The generative AI model then processes the query along with the respective profile(s) to generate a personalized response based on the profile.

Data may also be surfaced in chatbot experiences where interactions are occurring between an LLM-supported chat interface. When a query is processed, the query may be processed with one or more of the profiles discussed herein and the resultant output along with other data personalized to the user may be surfaced within the chat interface.

Additional data may also be surfaced concurrently with other web pages or web resources that are loaded through the web browser. This additional data may be further refined or personalized based on the profiles discussed herein.

FIG. 5 depicts an example process 500 for preprocessing web activities for a unique identifier. The operations of the method or process 500 may be performed by one or more of the computing devices discussed herein, such as by the server device 104. For instance, the data preprocessor 240 of the server device 104 may perform the operations of process 500.

At operation 502, raw web activity data for a particular unique identifier is accessed. The raw web activity data may be aggregated over a period of time for the particular identifier, such as between six months to two years. The raw web activity may be stored as aggregated data in the server device 104. For instance, as discussed further herein, the server device 104 may aggregate or otherwise collect raw web activity data from one or more client devices 102 associated with the unique identifier. The raw web activity data may include the type of raw web activity data discussed herein, such as data associated with web browsing, tab opening and closing, window opening and closing, subpages loaded, search queries, gaming data, social media data, etc. The web activity data may be formed of a series of data events, with each event having a web title, time stamp, and/or type of activity.

At operation 504, the raw web activity data is denoised. Denoising the data may include removing irrelevant signals, bot traffic, and/or redundant information. For instance, a web browser associated with the unique identifier may have hundreds of tabs opened within a day, and many of these tabs may be repetitive or irrelevant. For instance, a user may navigate to an email webpage every day. This type of repetitive data is not increasingly relevant; as such, it may be limited or removed. There also may be categories of web activity data that are removed through the denoising. For example, mundane events that do not provide particular context for interests, such as launching a web browser, may be removed. Additionally or alternatively, a series of complex heuristics may be applied to the raw web activity to denoise the data. Further, one or more ML models may be used to identify data that is unique or indicative of a surprising event as compared to regular activities. Such unique event data may then be preserved through the denoising process, where repetitive events may be removed. The reduction of data through the denoising process also reduces the total amount of data that needs to be processed by the downstream processes, such as the profile generation processes.

At operation 506, the denoised raw web activity data is filtered for safety and/or privacy. This operation helps ensure compliance with privacy policies and regulations. The process may also remove sensitive and/or harmful content from the web activity data. This filtering process may be performed through the use of heuristics as well as ML models that assess the raw web activity data to remove the harmful content.

At operation 508, the raw web activity data is annotated or otherwise tagged with a particular category. For example, the process 500 may use a defined set of N categories, such as a first category 406A, a second category 509B, a third category 509C, through an Nth category 509N. There may be between ten to twenty different categories, among other ranges of different categories. Categories may include topic or contextual categories, such as vehicles, travel, tourism, food, groceries, home, garden, sports, fitness, computers, consumer electronics, business, industrial, apparel, etc.

The process of annotating the web activity data may be performed through one or more ML or AI models, including through the use of LMs or other generative AI models within the AI models 108. For instance, the web activity data may be incorporated into an input prompt that is provided to the AI model with a request to append a category to each event in the web activity. The input prompt may further include the set of categories that may be used for categorization. In other examples, the web activity data may be categorized through an ML classifier that has been trained on the particular categories to be used for the annotation.

Once the web activity data has been annotated with the respective categories, the data is further reduced or pruned to reduce the total amount of data at operation 510. Reducing the web activity data may be performed on a recency basis and/or a frequency basis. This process may also provide weights to the data based on recency and the interaction frequency, such as how frequently the particular web activity occurs. This process may be performed based on a set of heuristics configured to generate the weights based on a comparison of the current date at which the process is occurring to the date associated with the respective element. Similarly, the weight for the interaction frequency may also be generated heuristically based on the number of times the event occurs within the entirety of the web activity data being analyzed. Accordingly, in some examples, after operation 510, each event in the remaining web activity data may have an annotated category as well as one or more weights associated with the event, such as a temporal weight and/or an interaction frequency weight.

The data may then be downsampled to a threshold number of events, such as 1000 events or fewer. The downsampling may be performed in a hierarchical manner. For instance, rare events may have a higher preference for remaining in the dataset. Rare events may be determined based on the source of the event. If these signals are available, up to a quarter of the full data threshold (e.g., 250 events of the 1000 total events) are retained if such rare events are available. Then, a recency-based sampling is performed. The recency-based sampling may use a temporal exponential decay to give more preference or weighting to recent events. A surprisal-based sampling may then occur with the events being sorted by timestamp. Events that are unusual or surprising are weighted higher so that they are more likely to be included within the data set. The determination of a surprising event may be based on a domain-based surprisal and/or a timegap-based surprisal. Timegap-based surprisal is based on a user being inactive for a longer period of time followed by an event occurring. This event is often more indicative of intentional action, and as such, the event is weighted higher and more likely to be included in the dataset. Domain-based surprisal is based on the domain of the event. For instance, a user may frequently visit the same domain or a few domains, thus resulting in many events associated with those domains. There is thus a risk of oversampling these events when selecting the ultimate dataset during this preprocessing of the web activity data. To avoid this oversampling, events associated with rarer domains (e.g., less frequently visiting domains) are weighted higher to increase the likelihood of those events being included in the limited dataset. Based on the weights and analyses, the pruned dataset is selected by selecting the highest weighted events up to the threshold (e.g., the top 1000 events).

At operation 512, the reduced set of web activity data may then be partitioned based on an event basis and/or a journey basis. For instance, the web activity data may be organized and/or grouped based on a shared contextual and temporal relationship, such as clusters of event data sharing such relationships. As such, as the data is analyzed by the AI model systems 108, subsets of the web activity data that are related to a common event or journey are analyzed together. This partitioning may include actually changing the order of the events in the data structure representing the dataset such that related event data is grouped together in the data that is ultimately provided to the one or more AI models 108 that process the data and generate the profiles discussed herein.

The identification of events that are related to a particular journey may be performed by a reasoning model that receives the remaining web activity data as input. For instance, after the denoising, filtering, and pruning operations, a thousand events may remain in the web activity data. These thousand events may be provided as input to the trained reasoning model, which is then able to identify the subsets of events that are associated with different journeys. The reasoning model may also provide a description of the particular journey, and such a description may be used to further annotate or tag the respective event data associated with each particular journey.

Once operation 512 has been completed, the web activity data may be considered to be preprocessed web activity data that is to be used for profile generation. At operation 514, the preprocessed web activity data is stored and/or transmitted for use in profile generation. For example, the preprocessed web activity data may be stored on the server device 104 and/or another cloud-based or network-based storage location. The preprocessed web activity may also be transmitted to or otherwise provided to the profile generator 235 of the server device 104.

FIG. 6 depicts an example data flow 600 for generating a long-term profile. The data flow 600 may be achieved or performed by one or more of the computing devices of the systems discussed herein, such as by the server device 104 and the AI model systems 108. For instance, the profile generator 235 may perform or process one or more of the stages of the data flow 600.

At an initial stage, profile-generation inputs 602 for a particular unique identifier (e.g., a particular user) are accessed or received. For instance, the profile-generation inputs 602 may be accessed from a cloud storage location and/or from storage on the server device 104. The profile-generation inputs 602 may include data such as preprocessed web activity data 604 and demographic data 606 for the unique identifier. The preprocessed web activity data 604 may be the preprocessed web activity data generated by performance of the process 500 of FIG. 5.

The profile-generation inputs 602 are then provided to an AI processing stage 608. The AI processing stage involves providing the profile-generation inputs 602 into one or more of the AI models 108, such as an LM. For instance, the profile-generation inputs 602 may be incorporated into an input prompt that includes request instructions for generation of the long-term profile. The input prompt may be a fixed data structure that includes the request phrase, the profile-generation inputs 602, and one or more criteria for generating the long-term profile, such as a schema for the profile and/or example components of the long-term profile. For instance, a prompt template with static text may be accessed and populated with the profile-generation inputs 602. For instance, the prompt template may include multiple dynamic data placeholders that are populated with the corresponding profile-generation inputs 602 when the input prompt is generated from the prompt template. The static text may include an example profile and/or segments of the long-term profile that is to be generated. The specific formatting requirements may also be set forth within the static text to help ensure consistent formatting of the long-term profile, which improves the processing abilities of the downstream applications that use the long-term profile as input.

The input prompt serves as the initial condition or starting point for the LM's generative process. The model may then employ techniques such as tokenization to break down the prompt into smaller units, like words or subwords, which may then be transformed into embeddings (e.g., numerical vector representations). These embeddings are processed through the model's layers, where attention mechanisms help the model focus on relevant parts of the input to produce an output. In this example, the output includes components of the long-term profile requested in the input prompt.

The output from the AI processing stage 608 includes one or more long-term profile components 610. The different components or sections may include a demographics and transitions section 612, a predictive actions section 614, and a category-specific preferences and journey-aware evidence section 616. The demographics and transitions section 612 may include data about the age, gender, location, and/or other demographics for the user. That section may also include data regarding major life changes for the user as well, such as marriages, new jobs, moving, etc. Local engagement data may also be incorporated into the section regarding engagement with local events, businesses, or other entities. The predictive actions section 614 provides for actions that are predicted to occur for the user. For each of the predicted actions in the predictive actions section 614, a likelihood of the action occurring (e.g., a likelihood score) and/or a timeframe for the action occurring may also be included.

The category-specific preferences and journey-aware evidence section 616 includes summaries for particular interests or preferences for different categories. This section may be broken apart into the different categories. For each of the categories, top brands and/or activities associated with the category may be listed as well as descriptions for those brands and/or activities. In addition, a confidence score and/or a freshness value may be associated with each of the categories. The confidence score is an output from the LM that indicates the confidence that the outputs within the particular category section are correct. The confidence scores may be a numerical score in the range of 0-1 (e.g., 0.9).

The freshness value is a value that provides or represents a temporal indication associated with the interests or data within the particular category of the long-term profile. The freshness value may be a score or tag. In some examples, discrete freshness values may be used to provide the temporal indication. For instance, the freshness value may be stale, emerging, consistent, and seasonal. The stale value indicates that the interest or preferences were previously consistent, but the interest or preferences have not been recently present (e.g., the web activity data associated with the interest or preferences is not present within the past few weeks or months). The emerging value indicates that the interest or data is more recent, such as an interest or preference that has emerged within the prior few weeks or months. The consistent value indicates that the interest or preferences have been longer term (e.g., 6 months or longer) and the interest or preferences are not significantly changing. The seasonal value indicates that interest or preferences occur seasonally rather than consistently. This temporal indication can be particularly useful given the longer term of data for which the long-term profile is generated as the interests or preferences of the user may be trending or changing over that long time frame.

These freshness values may then be used to assess whether the data in the long-term profile should be removed or replaced. For instance, if interests or preferences have been tagged as stale in multiple, sequentially generated long-term profiles, then the associated interests or preferences may be removed or replaced. The use of the freshness value helps allow the long-term profile to remain roughly the same length, which provides for an accurate state representation without having to increase the length of the data. Such length-preservation features improve the processing capabilities and reduce latency of the models and applications that process the profile, especially as compared to other RAG models, as discussed further herein.

The journey-aware or journey-based evidence may include underlying web activity data that supports the determined interests and descriptions associated with the respective categories. The evidence may include one or more events from the web-activity data. The evidence may include a timestamp when the event occurs. The evidence may also be a generated summary or description of multiple events within the web-activity data.

The different long-term profile components 610 are then incorporated into a completed long-term profile 618, which may be represented as an array of data. The long-term profile 618 is then stored for later use. The long-term profile 618 may be stored in cloud storage, the server device 104 (e.g., in the profile data store 220), and/or one or more of the client devices 102 (e.g., in the local profile data store 320).

One example of a long-term profile is provided below:

### Demographics & Transitions

- **Age Group:** [DETERMINED_AGEGROUP]
- **Gender:** [DETERMINED_GENDER]
- **Location:** [DETERMINED_LOCATION]
- **Local Engagement:** [DETERMINED_LOCALENGAGEMENT] (e.g., Frequent dining in local restaurants, active in local community events, regular visits to local medical facilities)

### Top N Interest Categories

### CATEGORY 1

**Confidence:** [CONFIDENCE_SCORE]
**Freshness:** [FRESHNESS_VALUE]

### Description:

- **top_brands**: [DETERMINED_BRANDS]
- **top_activities**: [DETERMINED_ACTIVITIES] (e.g., Following cast updates, tracking season premieres, engaging with show content)

### Evidence:

- [FIRST_EVIDENCE] (e.g., Chicago Fire Sets Dermot Mulroney as New Fire Chief for Season 13 (07-26-2024))
- [SECOND_EVIDENCE]
- [THIRD_EVIDENCE]

### Predicted Next Actions:

- [PREDICTED_FIRST_ACTION, LIKELIHOOD VALUE, TIME_TO_ACTION] (e.g., Watch new episodes of Chicago Fire Season 13 (High likelihood, Next 3 months))
- [PREDICTED_SECOND_ACTION, LIKELIHOOD VALUE, TIME_TO_ACTION]
- [PREDICTED_THIRD_ACTION, LIKELIHOOD VALUE, TIME_TO_ACTION]

### CATEGORY 2

**Confidence:** [CONFIDENCE_SCORE]
**Freshness:** [FRESHNESS_VALUE]

### Description:

- **top_brands**: [DETERMINED_BRANDS]
- **top_activities**: [DETERMINED_ACTIVITIES]

### Evidence:

- [FIRST_EVIDENCE]
- [SECOND_EVIDENCE]
- [THIRD_EVIDENCE]

### Predicted Next Actions:

- [PREDICTED_FIRST_ACTION, LIKELIHOOD VALUE, TIME_TO_ACTION]
- [PREDICTED_SECOND_ACTION, LIKELIHOOD VALUE, TIME_TO_ACTION]
- [PREDICTED_THIRD_ACTION, LIKELIHOOD VALUE, TIME_TO_ACTION] ...

### Category N

**Confidence:** [CONFIDENCE_SCORE]
**Freshness:** [FRESHNESS_VALUE]

### Description:

- **top_brands**: [DETERMINED_BRANDS]
- **top_activities**: [DETERMINED_ACTIVITIES]

### Evidence:

- [FIRST_EVIDENCE]
- [SECOND_EVIDENCE]
- [THIRD_EVIDENCE]

### Predicted Next Actions:

- [PREDICTED_FIRST_ACTION, LIKELIHOOD VALUE, TIME_TO_ACTION]
- [PREDICTED_SECOND_ACTION, LIKELIHOOD VALUE, TIME_TO_ACTION]
- [PREDICTED_THIRD_ACTION, LIKELIHOOD VALUE, TIME_TO_ACTION]

The completed long-term profile 618 may then be provided to an application-use stage 620 and/or a short-term profile generation stage 622. At the application-use stage 620, one or more applications extract or identify data based on the long-term profile 618 and then cause that data to be surfaced to the user corresponding to the unique identifier, such as by displaying the data in the user interface 350 of one of the client devices 102 associated with the unique identifier. At the short-term profile generation stage 622, the short-term profile for the same unique identifier is generated based at least partially on the long-term profile 618. Additional details regarding the generation of the short-term profile are discussed herein, such as with reference to FIG. 7.

FIG. 7 depicts an example data flow 700 for generating a short-term profile. The data flow 700 may be achieved or performed by one or more of the computing devices of the systems discussed herein, such as by the server device 104 and the AI model systems 108. For instance, the profile generator 235 may perform or process one or more of the stages of the data flow 700.

At an initial stage, different inputs for the generation of the short-term profile for a particular unique identifier are accessed. These different inputs may include recent web activity data 702, relevant past searches 704, and/or the long-term profile 706 for the particular unique identifier.

The recent web activity data 702 may be a subset of the preprocessed web activity data, such as the preprocessed web activity data generated from performing process 500 in FIG. 5. In other examples, the recent web activity data 702 may be raw web activity data aggregated for a shorter time period, such as one or two weeks.

The relevant past searches 704 may correspond to recent web searches or other database queries performed by a user associated with the unique identifier. For example, search queries that are provided into a web-browser-based search engine (e.g., the BING search engine) may be accessed and used as an input in generating the short-term profile. These relevant past searches 704 may be for the same time period as the recent web activity data 702 used for generating the short-term profile.

The long-term profile 706 may be the long-term profile 618 that was generated by the data flow 600 depicted in FIG. 6 and discussed above. For instance, the long-term profile 706 is the current long-term profile 706 for the unique identifier for which the short-term profile is being generated. The long-term profile 706 may be accessed from a cloud storage location, the profile data store 220, and/or the local profile data store 320.

The inputs are then provided to a sequential model system 708, which may be one of the AI model systems 108. The sequential model system 708 processes the inputs and generates a short-term profile in the form of an embedding, which may be referred to as a short-term profile embedding 710. For instance, long-term embedding components may be generated from the long-term profile and/or the different subsections therein. Short-term embedding components may then be generated from the recent web activity data 702. These embeddings may then be aggregated or otherwise joined to form the short-term profile embedding 710.

The short-term profile embedding 710 may then be used for a variety of operations and actions. For instance, the short-term profile embedding 710 may be used to generate one or more different queries that can be executed against one or more databases or data sources 106. As examples, immediate need queries 712, trending interest queries 714, and/or discovery queries 716 may be generated from the short-term profile embedding 710. The different queries may be generated from retrieval lookups performed based on the short-term profile embedding 710. The immediate need queries 712 may represent queries for current information requirements. The trending interest queries 714 may represent queries for emerging interests that are not yet reflected in the long-term profile. The discovery queries 716 represent queries for potential new areas of interest based on behavioral signals within the web activity data.

The short-term profile embedding 710 may also be provided directly to one or more applications 718 for use in extracting and surfacing data through the user interface 350 of a client device 102 associated with the unique identifier. The generated queries may also be transmitted to the applications 718 for use in extracting and surfacing data through the user interface 350. For instance, the applications 718 may execute one or more of the immediate need queries 712, the interest queries 714, and/or the discovery queries 716 to extract data from one or more databases or data sources 106.

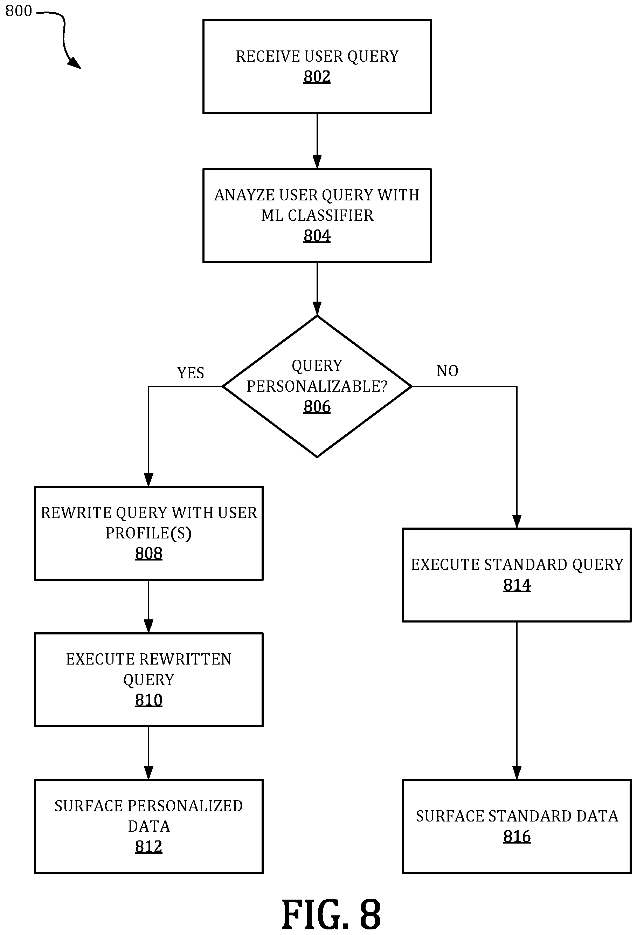

FIG. 8 depicts an example process 800 for rewriting and executing a query. The example process 800 may be performed by one or more of the computing devices disclosed herein, such as by one or more of the client devices 102 and/or the server device 104.

At operation 802, a user query is received. The user query may be received from a client device 102. For instance, the user query may be entered via a user interface 350 of a web browser. The user query may be for a web search or an interaction with a generative AI model.

At operation 804, the user query is analyzed with a machine learning (ML) classifier. The ML classifier may be one of the one or more AI model systems 108. The ML classifier is a trained model that classifies queries as to whether or not the query should be modified prior to the query being executed. For instance, the ML classifier classifies the query based on if the query would benefit from personalization based on one of the profiles discussed herein. The queries that may benefit from personalization may include ambiguous queries that have terms which may have different meanings as well as queries that may implicitly benefit from personalization, such as queries that are implicitly requesting data that would be personal to the user. The output of the ML classifier may be a score or other indicator that indicates the likelihood that the query would benefit from or otherwise be improved based on personalization or modification.

At operation 806, a determination is made as to whether the query is personalizable. The determination may be made based on comparing the output (e.g., score from the ML classifier) to a threshold.

If, at operation 806, it is determined that the query is not personalizable, the method 800 flows to operation 814 where the original or standard query is executed against the target database and/or target data source 106. The data extracted in response to the executed standard query (e.g., the query results) is then surfaced at operation 816. The extracted data may be surfaced as discussed herein.

If, at operation 806, the query is determined to be personalizable, the method 800 instead flows to operation 808. At operation 808, the query is rewritten based on the long-term profile and/or the short-term profile. Rewriting of the query may be performed through the use of an LM, such as fine-tuned SLM. For instance, the original query and the long-term profile and/or short-term profile may be provided as input to the LM with a request for the LM to generate a modified query. As an example, an input prompt may be generated that includes the original query and the long-term profile. Due to the limited length of the long-term profile, a smaller LM, such as an SLM, is able to process the data and generate the modified query.

At operation 810, the rewritten query is executed, and at operation 812 the query results are surfaced. Operations 810 and 812 may be similar to operations 814 and 816 but for the modified query rather than the standard query.

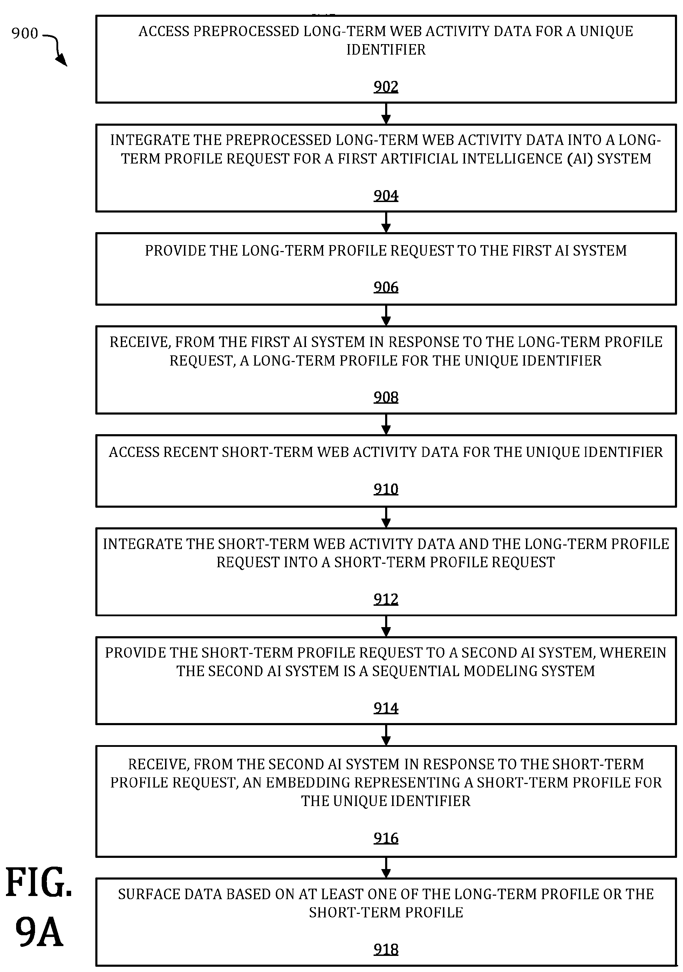

FIG. 9A depicts an example process 900 for efficiently surfacing data through long-term and short-term profiles. The example process 900 may be performed by one or more of the computing devices disclosed herein, such as by one or more of the client devices 102 and/or the server device 104.

As shown in FIG. 9A, process 900 may include, at operation 902, accessing preprocessed long-term web activity data for a unique identifier, where the preprocessed long-term web activity data is for a first time period. For example, the server device 104 may access preprocessed long-term web activity data for a unique identifier, where the preprocessed long-term web activity data is for a first time period, as described above.

The process 900 also includes, at operation 904, integrating the preprocessed long-term web activity data into a long-term profile request for a first artificial intelligence (AI) system. For example, the server device 104 may integrate the preprocessed long-term web activity data into a long-term profile request for a first artificial intelligence (ai) system, as described above. While the discussion below primarily refers to the server device 104 performing the operations, other or additional devices may be used to perform the operations of process 900.

As also shown in FIG. 9A, process 900 includes, at operation 906, providing the long-term profile request to the first AI system. For example, the server device 104 may provide the long-term profile request to the first AI system, such as one of the AI model systems 108, as described above.

At operation 908, the server device 104 receives, from the first AI system in response to the long-term profile request, a long-term profile for the unique identifier, as described above. The long-term profile may then be stored, as in a profile data store 220.

At operation 910, the server device 104 may access recent short-term web activity data for the unique identifier, as described above. As also shown in FIG. 9A, process 900 may include, at operation 912, integrating the short-term web activity data and the long-term profile into a short-term profile request, where the short-term web activity data is for a second time period that is shorter than the first time period. For example, the server device 104 may integrate the short-term web activity data and the long-term profile into a short-term profile request, where the short-term web activity data is for a second time period that is shorter than the first time period, as described above. At operation 914, the server device 104 provides the short-term profile request to a second AI system, where the second AI system is a sequential modeling system, as described above. For instance, the second AI system may be an AI system of the AI model systems 108.

At operation 916, the server device 104 receives, from the second AI system in response to the short-term profile request, an embedding representing a short-term profile for the unique identifier, as described above. The short-term profile embedding may then be stored, such as in the profile data store 220 of the server device 104 and/or the local profile data store 320 of one or more of the client devices 102.

At operation 918, data is surfaced based on at least one of the long-term profile or the short-term profile. For example, the data may be surfaced on a user interface 350 of a client device 102. Surfacing of the data may include transmitting the data to the client device 102 and causing the display of the data or playing audio of the data or other similar surfacing of the data. Surfacing of the data may also include generating or modifying one or more queries based on the long-term profile and/or the short-term profile, as discussed further herein. Such queries may then be executed against one or more of the data sources 106 to extract the data that is surfaced in operation 918.

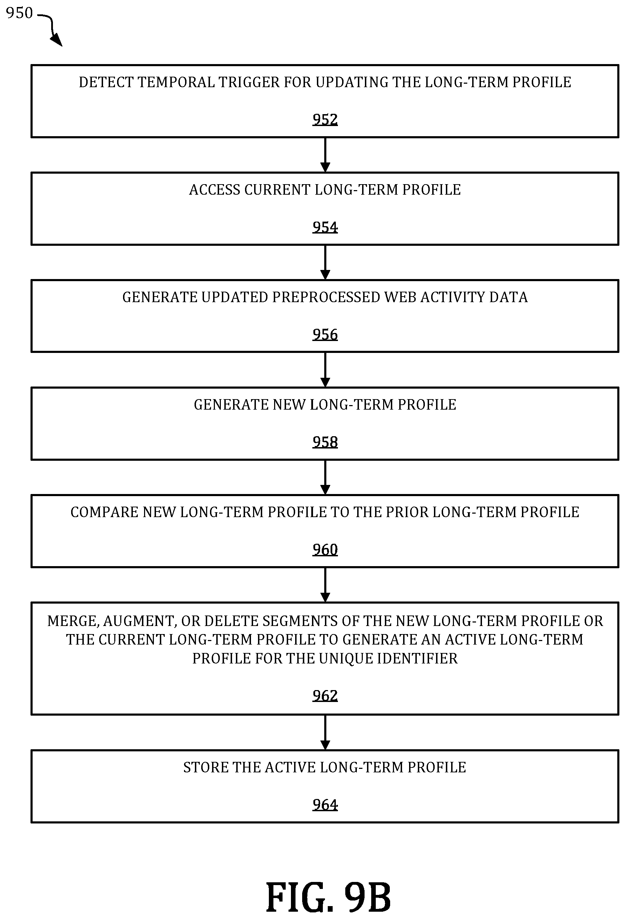

FIG. 9B depicts an example process 950 for updating a long-term profile. The example process 950 may be performed by one or more of the computing devices disclosed herein, such as by one or more of the client devices 102 and/or the server device 104.

At operation 952, a temporal trigger for updating the long-term profile is detected. The temporal trigger may be a set interval since the long-term profile was last updated or generated. For instance, a temporal trigger may be set to update the long-term profile every month, every few weeks, or a different cadence.

At operation 954, the current long-term profile for a unique identifier is accessed, such as from the profile data store 220 or the local profile data store 320. The current long-term profile is the long-term profile that was previously generated and is currently being used for the applications and uses discussed herein when operation 952 is performed.

At operation 956, updated preprocessed web activity data is generated. Generation of the updated preprocessed web activity data may be performed by performing the operations of method 500 in FIG. 5, for example, for a dataset from the current date to a prior long-term time frame. At operation 958, a new long-term profile is generated from the updated preprocessed web activity data. Generation of the new long-term profile may be performed by performing the operations of data flow 600 (FIG. 6) or method 900 (FIG. 9A) with the updated preprocessed web activity data.

At operation 960, the new long-term profile is compared to the current long-term profile to determine any differences between the new long-term profile and the current long-term profile. At operation 962, any identified differences may then be resolved by merging, augmenting, or deleting segments of the new long-term profile or the current long-term profile. The merging, augmenting, or deleting process results in another long-term profile that becomes the active long-term profile (e.g., the new current long-term profile) after method 900 is completed.

The determination as to whether data is to be merged, augmented, or deleted may be based on the freshness values and/or confidence values associated with the respective data. For instance, if a category segment (e.g., interests for Category 1) of the new long-term profile conflicts with a corresponding category segment and the new long-term profile indicates a freshness value for the segment of emerging and the current (e.g., prior) long-term profile indicates the segment had a freshness value of stale, the category segment for the new long-term profile is retained. In addition, if a category segment does not differ between the current and the new long-term profile, the category segment may still be deleted from both profiles (and thus the active long-term profile) if the freshness value indicates the data is stale in both profiles.

One or more of operations 960-962 may also be performed with the use of a generative AI model, such as an LM from the AI models 108. For instance, the new long-term profile and the current long-term profile may be incorporated into an input prompt that is provided as input to the LM. Based on the input prompt, the LM generates the differences between the two profiles or, in some examples, directly generates the active long-term profile.

At operation 964, the active long-term profile is stored, such as in the profile data store 220 or the local profile data store 320. The stored active long-term profile then becomes the current long-term profile for use with applications and/or generation of the short-term profiles. The method 950 may repeat on the set temporal cadence to continue to update the long-term profile.

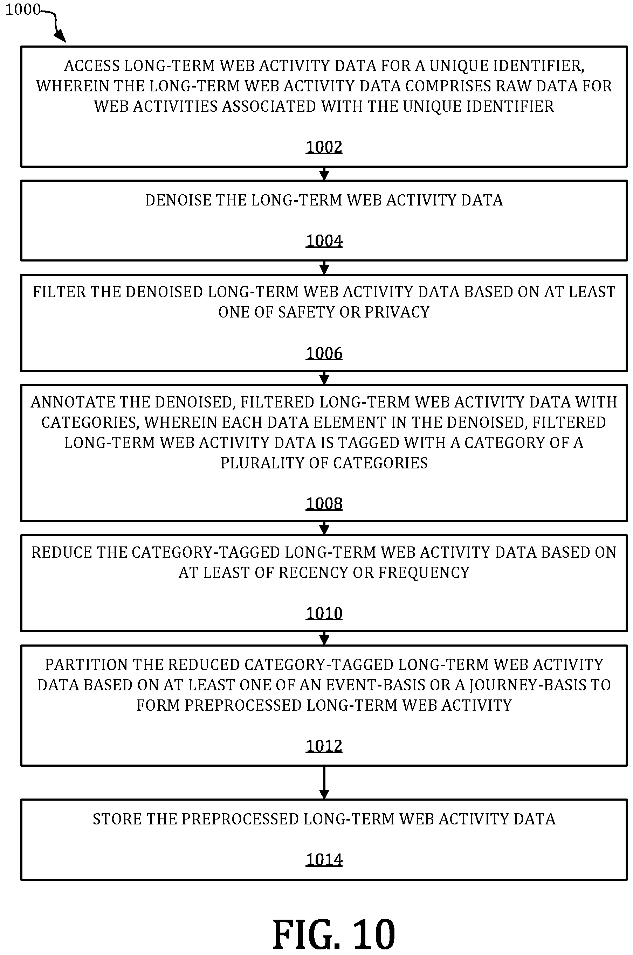

FIG. 10 is a flowchart of an example process 1000 for preprocessing raw web-activity data for use in generating long-term and/or short-term profiles. The example process 1000 may be performed by one or more of the computing devices disclosed herein, such as by one or more of the client devices 102 and/or the server device 104. While the discussion below primarily refers to the server device 104 performing the operations, other or additional devices may be used to perform the operations of process 1000.

As shown in FIG. 10, process 1000 may include, at operation 1002, accessing long-term web activity data for a unique identifier, where the long-term web activity data may include raw data for web activities associated with the unique identifier. At operation 1004, the server device 104 denoise the long-term web activity data, as described above. At operation 1006, the server device 104 may filter the denoised long-term web activity data based on at least one of safety or privacy, as described above.

At operation 1008, the server device 104 may annotate the denoised, filtered long-term web activity data with categories, where each data element in the denoised, filtered long-term web activity data is tagged with a category of a plurality of categories to generate category-tagged long-term web activity data, as described above.

As further shown in FIG. 10, process 1000 may include, at operation 1010, reducing the category-tagged long-term web activity data based on at least one of recency or frequency. For example, the server device 104 may reduce the category-tagged long-term web activity data based on at least one of recency or frequency, as described above.

Process 1000 may include, at operation 1012, partitioning the reduced category-tagged long-term web activity data based on at least one of an event-basis or a journey-basis to form preprocessed long-term web activity. For example, the server device 104 may partition the reduced category-tagged long-term web activity data based on at least one of an event-basis or a journey-basis to form preprocessed long-term web activity, as described above. At operation 1014, he preprocessed long-term web activity may then be stored within the server device 104 or another storage location. The preprocessed long-term web activity may then be used for profile generation as discussed further herein.

As should be appreciated from the foregoing, the technology provided herein provide for multiple advantages including technical advances that improve the functioning, processing, and memory management for the computing systems described herein. For instance, the profiles discussed herein provide a highly scalable system that was not possible with traditional RAG-based personalization. For instance, RAG-based systems search through the entire conversation history or interaction history for the user. This approach becomes increasingly inefficient and computationally expensive as history grows. In addition, such systems lack any mechanisms to identify when information becomes outdated or irrelevant.

In contrast, the scalable profile approach discussed herein provides solutions to such problems. For instance, instead of unlimited history retrieval, the profile approach maintains compact, nearly fixed-length user profiles that capture the essential preferences while remaining computationally efficient. For example, the profiles may include explicit freshness and evidence indications that systematically prune stale interests and outdated information, ensuring recommendations remain current and relevant regardless of how long a user has been in the system. Thus, the profile generation system described herein is capable of delivering superior performance at scale, handing millions of users with consistent latency while maintaining up-to-date preference models that reflect users' evolving interests.

In addition, the advanced preprocessing pipeline and functions described herein enables high performance of the AI model systems and the applications discussed herein. For instance, the comprehensive denoising and filtering provides for multi-stage preprocessing that helps ensure that the AI model systems (e.g., LLMs) receive only high-quality signals, which improves downstream performance. Further, unlike systems that treat all historical data equally, the temporal pruning mechanisms of the present technology help ensure appropriate weighting of signals based on their recurrence patterns and temporal relevance, preventing outdated preferences from dominating current predictions. Moreover, the sophisticated event-based or journey-based partitioning that groups related activity into coherent user journeys allows for the AI model systems to better process or understand contextual sequences rather than isolated behaviors, which significantly improves and enhances the inference accuracy from the underlying models of the AI model systems. This preprocessing architecture represents a fundamental advancement over other approaches. By providing AI models, such as LLMs, with properly structured, temporally weighted, and contextually grouped data, the technology disclosed herein enables the AI models to make connections and inferences that would be incredibly difficult if not impossible with raw activity streams. The quality of extraction and surfacing of personalized data is directly tied to the quality of data preparation, making the preprocessing pipeline potentially as important as the profile generation itself.

The hierarchical approach of the present technology also provides for benefits over flat profile models. For instance, the hierarchical approach of some of the examples disclosed herein spans from coarse-grained categories to fine-grained preferences. Such a structure allows for both broad targeting and surfacing of data to highly specific personalization and surfacing within the same framework.

The parallel profile generation of both long-term and short-term profiles further provides for complementary time horizons by balancing stable long-term preferences with immediate short-term needs. Other chat systems often use simple memory retrieval to fetch relevant conversation history for context, whereas the approach disclosed herein leverages sequential modeling to identify patterns in recent behavior, not just recall the underlying activities, while building a long-term profile that captures evolving user preferences and interaction patterns.

FIG. 11 and the associated description provide a discussion of a variety of operating environments in which examples of the invention may be practiced. However, the devices and systems illustrated and discussed with respect to FIG. 11 are for purposes of example and illustration and are not limiting of a vast number of computing device configurations that may be utilized for practicing aspects of the invention, described herein.

FIG. 11 is a block diagram illustrating physical components (i.e., hardware) of a computing device 1100 with which examples of the present disclosure may be practiced. The computing device components described below may be suitable for a client device running the web browser discussed above. In a basic configuration, the computing device 1100 may include a processing system 1102 including at least one processing unit and a system memory 1104. Depending on the configuration and type of computing device, the system memory 1104 may comprise, but is not limited to, volatile storage (e.g., random access memory), non-volatile storage (e.g., read-only memory), flash memory, or any combination of such memories. The system memory 1104 may include an operating system 1105 and one or more program modules 1106 suitable for running software applications 1150 (e.g., web browser 310).

The operating system 1105, for example, may be suitable for controlling the operation of the computing device 1100. Furthermore, aspects of the invention may be practiced in conjunction with a graphics library, other operating systems, or any other application program and are not limited to any particular application or system. This basic configuration is illustrated in FIG. 11 by those components within a dashed line 1108. The computing device 1100 may have additional features or functionality. For example, the computing device 1100 may also include additional data storage devices (removable and/or non-removable) such as, for example, magnetic disks, optical disks, or tape. Such additional storage is illustrated in FIG. 11 by a removable storage device 1109 and a non-removable storage device 1110.

As stated above, a number of program modules and data files may be stored in the system memory 1104. While executing on the processing system 1102, the program modules 1106 may perform processes including, but not limited to, one or more of the operations of the methods and/or data flows illustrated in the Figures. Other program modules may be used in accordance with examples of the present technology and may include applications such as electronic mail and contacts applications, word processing applications, spreadsheet applications, database applications, slide presentation applications, drawing or computer-aided application programs, etc.

Furthermore, examples of the invention may be practiced in an electrical circuit comprising discrete electronic elements, packaged or integrated electronic chips containing logic gates, a circuit utilizing a microprocessor, or on a single chip containing electronic elements or microprocessors. For example, examples of the invention may be practiced via a system-on-a-chip (SOC) where each or many of the components illustrated in FIG. 11 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to generating suggested queries, may be operated via application-specific logic integrated with other components of the computing device 1100 on the single integrated circuit (chip). Examples of the present disclosure may also be practiced using other technologies capable of performing logical operations such as, for example, AND, OR, and NOT, including but not limited to mechanical, optical, fluidic, and quantum technologies.

The computing device 1100 may also have one or more input device(s) 1112 such as a keyboard, a mouse, a pen, a sound input device, a touch input device, etc. The output device(s) 1114 such as a display, speakers, a printer, etc. may also be included. The aforementioned devices are examples and others may be used. The computing device 1100 may include one or more communication connections 1116 allowing communications with other computing devices 1118. Examples of suitable communication connections 1116 include, but are not limited to, RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 1104, the removable storage device 1109, and the non-removable storage device 1110 are all computer storage media examples (i.e., memory storage). Computer storage media may include RAM, ROM, electrically erasable programmable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 1100. Any such computer storage media may be part of the computing device 1100. Computer storage media does not include a carrier wave or other propagated data signal.

As should be appreciated from the foregoing, the technology disclosed herein relates to various systems and methods for surfacing data, including at least the features and elements set forth within the following clauses.

Example Clause A: A system for efficiently surfacing data, the system may include at least one processor and memory storing instructions that, when executed by the at least one processor, cause the system to perform operations. These operations may include accessing preprocessed long-term web activity data for a unique identifier, where the preprocessed long-term web activity data is for a first time period, integrating the preprocessed long-term web activity data into a long-term profile request for a first artificial intelligence (AI) system, providing the long-term profile request to the first AI system, receiving from the first AI system, in response to the long-term profile request, a long-term profile for the unique identifier, accessing recent short-term web activity data for the unique identifier, providing a short-term profile request to a second AI system, where the second AI system is a sequential modeling system, where the short-term profile request includes the long-term profile and short-term web activity data, where the short-term web activity data is for a second time period that is shorter than the first time period, receiving from the second AI system, in response to the short-term profile request, an embedding representing a short-term profile for the unique identifier, and surfacing data based on at least one of the long-term profile or the short-term profile.

Example Clause B: The system of Example Clause A, where the operations further may include preprocessing the long-term web activity data by accessing long-term web activity data for the unique identifier, where the long-term web activity data may include raw data for web activities performed during the first time period and associated with the unique identifier, denoising the long-term web activity data, filtering the denoised long-term web activity data based on at least one of safety or privacy, and annotating the denoised filtered long-term web activity data with categories, where each data element in the denoised filtered long-term web activity data is tagged with a category of a plurality of categories to generate category-tagged long-term web activity data.

Example Clause C: The system of Example Clause A or Example Clause B, where the operations further may include reducing the category-tagged long-term web activity data based on at least one of recency or frequency.

Example Clause D: The system of any one of Example Clauses A-C, where the operations further may include forming the preprocessed long-term web activity by partitioning the category-tagged long-term web activity data based on both temporal and contextual relationships of the web activities in the category-tagged long-term web activity data.

Example Clause E: The system of any one of Example Clauses A-D, where denoising the long-term web activity data includes removing data associated with one or more categories of web activity data.

Example Clause F: The system of any one of Example Clauses A-E, where the long-term profile is a current long-term profile, where the operations further may include detecting a temporal trigger for updating the current long-term profile, generating updated preprocessed web activity data, generating a new long-term profile, comparing the current long-term profile to the new long-term profile, performing at least one of merging, augmenting, or deleting segments of the new long-term profile or the current long-term profile to generate an active long-term profile for the unique identifier, and storing the active long-term profile.

Example Clause G: The system of any one of Example Clauses A-F, where the long-term profile may include an array of data, may include at least two of a demographics section, a transitions section, a category-specific preferences section, and a predictive actions section.

Example Clause H: The system of any one of Example Clauses A-G, where the long-term profile may include the category-specific preferences section, and the category-specific preferences section includes at least one of a confidence value or a freshness value.

Example Clause I: The system of any one of Example Clauses A-H, where the category-specific preferences section includes category-specific preferences for the unique identifier and at least one of event-based evidence or journey-based evidence.

Example Clause J: The system of any one of Example Clauses A-I, where the long-term profile includes the predictive actions section, and the predictive actions section includes at least one action predicted to be taken by a user associated with the unique identifier, where the predicted action includes an associated time period for when the action is to be taken and a predicted likelihood that the action will occur.

Example Clause K: A computer-implemented method for efficiently surfacing data, the method may include accessing preprocessed long-term web activity data for a unique identifier, where the preprocessed long-term web activity data is for a first time period, integrating the preprocessed long-term web activity data into a long-term profile request for a first artificial intelligence (AI) system, providing the long-term profile request to the first AI system, receiving from the first AI system, in response to the long-term profile request, a long-term profile for the unique identifier, accessing recent short-term web activity data for the unique identifier, integrating the short-term web activity data and the long-term profile into a short-term profile request, where the short-term web activity data is for a second time period that is shorter than the first time period, providing the short-term profile request to a second AI system, where the second AI system is a sequential modeling system, receiving from the second AI system, in response to the short-term profile request, an embedding representing a short-term profile for the unique identifier, and surfacing data based on at least one of the long-term profile or the short-term profile.

Example Clause L: The computer-implemented method of Example Clause K, where surfacing the data may include receiving a search query associated with the unique identifier, modifying the search query based on the long-term profile and the short-term profile, executing the modified search query to generate search results, and causing display of the generated search results on a user interface of a device associated with the unique identifier.

Example Clause M: The computer-implemented method of Example Clause K or Example Clause L, where surfacing the data may include generating one or more queries based on the embedding representing the short-term profile, executing the generated one or more queries to generate search results, and causing display of the generated search results on a user interface of a device associated with the unique identifier.

Example Clause N: The computer-implemented method of any one of Example Clauses K-M, where the one or more queries includes at least two of an immediate need query, a trending interest query, or a discovery query.

Example Clause O: The computer-implemented method of any one of Example Clauses K-N, where surfacing the data may include receiving a search query associated with the unique identifier, analyzing the search query with a machine learning (ML) classifier to classify the search query, based on the classification of the search query, determining that the search query should be modified based on at least one of the long-term profile or the embedding representing the short-term profile, modifying the search query based on at least one of the long-term profile or the embedding representing the short-term profile, and executing the modified query to generate search results.

Example Clause P: A computer-implemented method for efficiently surfacing data, the method may include accessing long-term web activity data for a unique identifier, where the long-term web activity data may include raw data for web activities associated with the unique identifier, denoising the long-term web activity data, filtering the denoised long-term web activity data based on at least one of safety or privacy, annotating the denoised filtered long-term web activity data with categories, where each data element in the denoised filtered long-term web activity data is tagged with a category of a plurality of categories to generate category-tagged long-term web activity data, reducing the category-tagged long-term web activity data based on at least one of recency or frequency, partitioning the reduced category-tagged long-term web activity data based on at least one of an event-basis or a journey-basis to form preprocessed long-term web activity data, integrating the preprocessed long-term web activity data into a long-term profile request for a first artificial intelligence (AI) system, providing the long-term profile request to the first AI system, receiving from the first AI system, in response to the long-term profile request, a long-term profile for the unique identifier, and surfacing data based on the long-term profile.

Example Clause Q: The computer-implemented method of Example Clause P further may include accessing recent short-term web activity data for the unique identifier, integrating the short-term web activity data and the long-term profile request into a short-term profile request, providing the short-term profile request to a second AI system, where the second AI system is a sequential modeling system, and receiving from the second AI system, in response to the short-term profile request, an embedding representing a short-term profile for the unique identifier.

Example Clause R: The computer-implemented method of Example Clause P or Example Clause Q, where surfacing the data is further based on the embedding representing the short-term profile.

Example Clause S: The computer-implemented method of any one of Example Clauses P-R, where denoising the long-term web activity data includes removing data associated with one or more categories of web activity data.

Example Clause T: The computer-implemented method of any one of Example Clauses P-S, where partitioning the reduced category-tagged long-term web activity data includes grouping the web activity based on underlying events sharing a temporal and contextual relationship.

The foregoing disclosure provides illustration and description but is not intended to be exhaustive or to limit the implementations to the precise form disclosed. Modifications may be made in light of the above disclosure or may be acquired from practice of the implementations. As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein. As used herein, satisfying a threshold may, depending on the context, refer to a value being greater than the threshold, greater than or equal to the threshold, less than the threshold, less than or equal to the threshold, equal to the threshold, and/or the like, depending on the context. Although particular combinations of features are recited in the claims and/or disclosed in the specification, these combinations are not intended to limit the disclosure of various implementations. In fact, many of these features may be combined in ways not specifically recited in the claims and/or disclosed in the specification.

Although each dependent claim listed below may directly depend on only one claim, the disclosure of various implementations includes each dependent claim in combination with every other claim in the claim set. No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

Aspects of the present invention, for example, are described above with reference to block diagrams and/or operational illustrations of methods, systems, and computer program products according to aspects of the invention. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved. Further, as used herein and in the claims, the phrase "at least one of element A, element B, or element C" is intended to convey any of: element A, element B, element C, elements A and B, elements A and C, elements B and C, and elements A, B, and C.

The description and illustration of one or more examples provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively included or omitted to produce an example with a particular set of features. Having been provided with the description and illustration of the present application, one skilled in the art may envision variations, modifications, and alternate examples falling within the spirit of the broader aspects of the general inventive concept embodied in this application that do not depart from the broader scope of the claimed invention.

This application claims priority to US 19/231,178 filed June 6, 2025 the entirety of which is hereby incorporated herein by reference for all purposes.

## Claims

1. A system for efficiently surfacing data, the system comprising:
at least one processor; and
memory, storing instructions, that when executed by the at least one processor, cause the system to perform operations comprising:
accessing (902) preprocessed long-term web activity data for a unique identifier, wherein the preprocessed long-term web activity data is for a first time period;
integrating (904) the preprocessed long-term web activity data into a long-term profile request for a first artificial intelligence, AI, system;
providing (906) the long-term profile request to the first AI system;
receiving (908), from the first AI system in response to the long-term profile request, a long-term profile for the unique identifier;
accessing (910) recent short-term web activity data for the unique identifier;
providing (914) a short-term profile request to a second AI system, wherein the second AI system is a sequential modeling system, wherein the short-term profile request includes the long-term profile and short-term web activity data, wherein the short-term web activity data is for a second time period that is shorter than the first time period;
receiving (916), from the second AI system in response to the short-term profile request, an embedding representing a short-term profile for the unique identifier; and
surfacing (918) data based on at least one of the long-term profile or the short-term profile.

2. The system of claim 1, wherein the operations further comprise preprocessing the long-term web activity data by:
accessing long-term web activity data for the unique identifier, wherein the long-term web activity data comprises raw data for web activities performed during the first time period and associated with the unique identifier;
denoising the long-term web activity data;
filtering the denoised long-term web activity data based on at least one of safety or privacy; and
annotating the denoised, filtered long-term web activity data with categories, wherein each data element in the denoised, filtered long-term web activity data is tagged with a category of a plurality of categories to generate category-tagged long-term web activity data.

3. The system of claim 2, wherein the operations further comprise at least one of the following:
(i) reducing the category-tagged long-term web activity data based on at least one of recency or frequency;
(ii) forming the preprocessed long-term web activity by partitioning the category-tagged long-term web activity data based on both temporal and contextual relationships of the web activities in the category-tagged long-term web activity data.

4. The system of claim 1, wherein the long-term profile is a current long-term profile, wherein the operations further comprise:
detecting a temporal trigger for updating the current long-term profile;
generating updated preprocessed web activity data;
generating a new long-term profile;
comparing the current long-term profile to the new long-term profile;
performing at least one of merging, augmenting, or deleting segments of the new long-term profile or the current long-term profile to generate an active long-term profile for the unique identifier; and
storing the active long-term profile.

5. The system of claim 1, wherein the long-term profile comprises an array of data comprising at least two of a demographics section, a transitions section, a category-specific preferences section, and a predictive actions section.

6. The system of claim 5, wherein the long-term profile comprises the category-specific preferences section, and the category-specific preferences section includes at least one of a confidence value or a freshness value;
optionally further wherein the category-specific preferences section includes category-specific preferences for the unique identifier and at least one of event-based evidence or journey-based evidence.

7. The system of claim 5, wherein the long-term profile includes the predictive actions section, and the predictive actions section includes at least one action predicted to be taken by a user associated with the unique identifier, wherein the predicted action includes an associated time period for when the action is to be taken and a predicted likelihood that the action will occur.

8. A computer-implemented method for efficiently surfacing data, the method comprising:
accessing (902) preprocessed long-term web activity data for a unique identifier, wherein the preprocessed long-term web activity data is for a first time period;
integrating (904) the preprocessed long-term web activity data into a long-term profile request for a first artificial intelligence, AI, system;
providing (906) the long-term profile request to the first AI system;
receiving (908), from the first AI system in response to the long-term profile request, a long-term profile for the unique identifier;
accessing (910) recent short-term web activity data for the unique identifier;
integrating (912) the short-term web activity data and the long-term profile into a short-term profile request, wherein the short-term web activity data is for a second time period that is shorter than the first time period;
providing (914) the short-term profile request to a second AI system, wherein the second AI system is a sequential modeling system;
receiving (916), from the second AI system in response to the short-term profile request, an embedding representing a short-term profile for the unique identifier; and
surfacing (918) data based on at least one of the long-term profile or the short-term profile.

9. The computer-implemented method of claim 8, wherein surfacing the data comprises:
receiving a search query associated with the unique identifier;
modifying the search query based on the long-term profile and the short-term profile;
executing the modified search query to generate search results; and
causing display of the generated search results on a user interface of a device associated with the unique identifier.

10. The computer-implemented method of claim 8, wherein surfacing the data comprises:
generating one or more queries based on the embedding representing the short-term profile;
executing the generated one or more queries to generate search results; and
causing display of the generated search results on a user interface of a device associated with the unique identifier;
optionally further wherein the one or more queries includes at least two of an immediate need query, a trending interest query, or a discovery query.

11. The computer-implemented method of claim 8, wherein surfacing the data comprises:
receiving a search query associated with the unique identifier;
analyzing the search query with a machine learning, ML, classifier to classify the search query;
based on the classification of the search query, determining that the search query should be modified based on at least one of the long-term profile or the embedding representing the short-term profile;
modifying the search query based on based on at least one of the long-term profile or the embedding representing the short-term profile; and
executing the modified query to generate search results.

12. A computer-implemented method for efficiently surfacing data, the method comprising:
accessing long-term web activity data for a unique identifier, wherein the long-term web activity data comprises raw data for web activities associated with the unique identifier;
denoising the long-term web activity data;
filtering the denoised long-term web activity data based on at least one of safety or privacy;
annotating the denoised, filtered long-term web activity data with categories, wherein each data element in the denoised, filtered long-term web activity data is tagged with a category of a plurality of categories to generate category-tagged long-term web activity data;
reducing the category-tagged long-term web activity data based on at least one of recency or frequency;
partitioning the reduced category-tagged long-term web activity data based on at least one of an event-basis or a journey-basis to form preprocessed long-term web activity data;
integrating the preprocessed long-term web activity data into a long-term profile request for a first artificial intelligence, AI, system;
providing the long-term profile request to the first AI system;
receiving, from the first AI system in response to the long-term profile request, a long-term profile for the unique identifier; and
surfacing data based on the long-term profile.

13. The computer-implemented method of claim 12, further comprising:
accessing recent short-term web activity data for the unique identifier;
integrating the short-term web activity data and the long-term profile request into a short-term profile request;
providing the short-term profile request to a second AI system, wherein the second AI system is a sequential modeling system; and
receiving, from the second AI system in response to the short-term profile request, an embedding representing a short-term profile for the unique identifier;
optionally further wherein surfacing the data is further based on the embedding representing the short-term profile.

14. The system of claim 2 or the computer-implemented method of claim 12, wherein denoising the long-term web activity data includes removing data associated with one or more categories of web activity data.

15. The computer-implemented method of claim 12, wherein partitioning the reduced category-tagged long-term web activity data includes grouping the web activity based on underlying events sharing a temporal and contextual relationship.
